# EUROPEAN PATENT APPLICATION

(11) **EP 4 811 751 A1**
(43) Date of publication of application: **23.09.2026**
(21) Application number: 24907804.9
(22) Date of filing: 15.11.2024
(51) Int. Cl.: H04L 67/125, H04L 9/32, H04W 4/80, G06F 3/048, G16Y 40/30

(54) **USER DEVICE AND SYSTEM FOR ONBOARDING EXTERNAL ELECTRONIC DEVICE TO SERVER FROM USER DEVICE**

(30) Priority: 19.12.2023 KR 20230186401
(71) Applicant: Samsung Electronics Co., Ltd., Suwon-si, Gyeonggi-do 16677 (KR)
(72) Inventor: HAHM, Seongil, Suwon-si, Gyeonggi-do 16677 (KR); KIM, Jinhwan, Suwon-si, Gyeonggi-do 16677 (KR); KIM, Hyunsoo, Suwon-si, Gyeonggi-do 16677 (KR)
(74) Representative: Walaski, Jan Filip
(86) International application number: PCT/KR2024/018072
(87) International publication number: WO 2025/135519

(57) **Abstract**

According to an aspect of the disclosure, a system for onboarding an electronic device to a cloud network may include: a cloud network; a user device including first communication circuitry configured to establish communication with the electronic device registered with the cloud network, a first user interface, and a first processor electrically connected to the first communication circuitry and the first user interface; and the electronic device including second communication circuitry configured to establish communication with the user device, a second user interface, and a second processor electrically connected to the second communication circuitry and the second user interface, wherein the first processor may be configured to control the first user interface to output a first guide for requesting confirmation according to a preset default authentication method, based on establishment of communication between the first communication circuitry and the electronic device, and the second processor may be configured to control the second user interface to output a second guide indicating that the electronic device is in a state for receiving the confirmation according to the preset default authentication method.

## Description

### [Technical Field]

The disclosure relates to a user device and a system for onboarding an external electronic device to a server from the user device.

### [Background Art]

Cloud computing technology provides computing services such as servers, storage, software, or analytics by providing computing resources located at a different location from a user via a network. Cloud computing is being utilized to process data generated by Internet of things (IoT) devices. User data or content collected from an IoT device is stored on a cloud server, and cloud services may be provided to the user through data processing.

In order to use an IoT device in an IoT environment, an onboarding process for registering the IoT device with a cloud network is required. To onboard the IoT device, authentication information for authenticating the IoT device, uniform resource locator (URL) information required to access the cloud network, and/or device information such as a device type, a profile, or location information of the IoT device may be required.

The process of onboarding the IoT device to the cloud network includes a manual process performed by a user. A device authentication process must be performed, such as executing an onboarding application for the IoT device and manually entering an identifier and a password as network credentials. In particular, the user is required to wait for several seconds until an authentication guide for the IoT device is provided, causing inconvenience to the user, and the user may cancel the connection during the process.

### [Disclosure]

### [Technical Problem]

The disclosure provides a user device and a system for quickly onboarding an external electronic device to a server from the user device.

### [Technical Solution]

According to an aspect of the disclosure, a user device may include: communication circuitry configured to establish communication with an electronic device registered with a cloud server; a user interface; and a processor electrically connected to the communication circuitry and the user interface.

The processor may be configured to: control the user interface to output a first guide for requesting confirmation according to a preset default authentication method, based on establishment of communication between the communication circuitry and the electronic device, and transmit a control signal to the electronic device to output a second guide indicating that the electronic device is in a state for receiving the confirmation according to the preset default authentication method.

According to an aspect of the disclosure, a system for onboarding an electronic device
may include: a cloud network; a user device including first communication circuitry configured to establish communication with an electronic device registered with the cloud network, a first user interface, and a first processor electrically connected to the first communication circuitry and the first user interface; and an electronic device including second communication circuitry configured to establish communication with the user device, a second user interface, and a second processor electrically connected to the second communication circuitry and the second user interface.

The first processor may be configured to control the first user interface to output a first guide for requesting confirmation according to a preset default authentication method, based on establishment of communication between the first communication circuitry and the electronic device, and the second processor may be configured to control the second user interface to output a second guide indicating that the electronic device is in a state for receiving the confirmation according to the preset default authentication method.

According to an aspect of the disclosure, a method for onboarding an electronic device may include: establishing communication between a user device including a first user interface and an electronic device including a second user interface and registered with a cloud network; outputting, to the first user interface, a first guide for requesting confirmation according to the preset default authentication method, based on establishment of communication between the user device and the electronic device; and outputting, to the second user interface, a second guide indicating that the electronic device is in a state for receiving the confirmation according to the preset default authentication method, simultaneously with the first guide or at a different time.

The user device according to an embodiment of the disclosure may further include memory configured to store state information about the default device authentication.

### [Advantageous Effects]

According to an aspect of the disclosure, connection time may be reduced and user convenience may be improved by performing device authentication using a preset default authentication method without requiring a user to wait until data exchange for negotiating the device authentication method is completed.

Technical aspects that can be achieved by the disclosure are not limited to the above-mentioned aspects, and other technical aspects not mentioned will be clearly understood by one of ordinary skill in the technical art to which the disclosure belongs from the following description.

### [Description of Drawings]

FIG. 1 illustrates a plurality of devices in an Internet of things (IoT) environment according to an embodiment.
FIG. 2 illustrates an example of an IoT server of an IoT system according to an embodiment.
FIG. 3 illustrates an example of each device of an IoT system according to an embodiment.
FIG. 4 is a block diagram schematically illustrating an electronic device in an IoT environment according to an embodiment.
FIG. 5 is a control block diagram of an electronic device according to an embodiment.
FIG. 6 is a flowchart illustrating an example of an onboarding method of an IoT device according to an embodiment.
FIG. 7 illustrates an example of a device authentication process of an electronic device for onboarding of the electronic device according to an embodiment.
FIG. 8 illustrates an example of a screen displayed on a user interface of a user device after an electronic device is identified according to an embodiment.
FIG. 9 illustrates an example of a screen displayed on a user interface of a user device while data communication for negotiating a device authentication method is performed according to an embodiment.
FIG. 10 illustrates an example of a screen displayed on a user interface of a user device to guide authentication according to a negotiated authentication method of an electronic device according to an embodiment.
FIG. 11 illustrates an example of a screen displayed on a user interface of an electronic device to receive a confirmation input for authentication of the electronic device according to an embodiment.
FIG. 12 is a flowchart illustrating default device authentication between a user device and an electronic device according to an embodiment.
FIG. 13 is a flowchart illustrating default device authentication between a user device and an electronic device according to another embodiment.

### [Modes of the Invention]

Various embodiments of the disclosure and terms used herein are not intended to limit the technical features described herein to specific embodiments, and should be understood to include various modifications, equivalents, or substitutions of the corresponding embodiments.

In describing of the drawings, similar reference numerals may be used for similar or related elements.

The singular form of a noun corresponding to an item may include one or more of the items unless clearly indicated otherwise in a related context.

In the disclosure, phrases, such as "A or B", "at least one of A and B", "at least one of A or B", "A, B or C", "at least one of A, B and C", and "at least one of A, B, or C" may include any one or all possible combinations of the items listed together in the corresponding phrase among the phrases.

The term "and/or" includes any and all combinations of one or more of the associated listed items.

Terms such as "1st", "2nd", "primary", or "secondary" may be used simply to distinguish an element from other elements, without limiting the element in other aspects (e.g., importance or order).

When an element (e.g., a first element) is referred to as being "(functionally or communicatively) coupled" or "connected" to another element (e.g., a second element), the first element may be connected to the second element, directly (e.g., wired), wirelessly, or through a third element.

It will be understood that when the terms "includes", "comprises", "including", and/or "comprising" are used in the disclosure, they specify the presence of the specified features, figures, steps, operations, components, members, or combinations thereof, but do not preclude the presence or addition of one or more other features, figures, steps, operations, components, members, or combinations thereof.

When a given element is referred to as being "connected to", "coupled to", "supported by" or "in contact with" another element, it is to be understood that it may be directly or indirectly connected to, coupled to, supported by, or in contact with the other element. When a given element is indirectly connected to, coupled to, supported by, or in contact with another element, it is to be understood that it may be connected to, coupled to, supported by, or in contact with the other element through a third element.

It will also be understood that when an element is referred to as being "on" another element, it may be directly on the other element or intervening elements may also be present.

Meanwhile, the terms "front," "rear," "upper," "lower," "left," "right,", etc., used in the following description are defined based on the drawings, and the shape and position of each component are not limited by these terms.

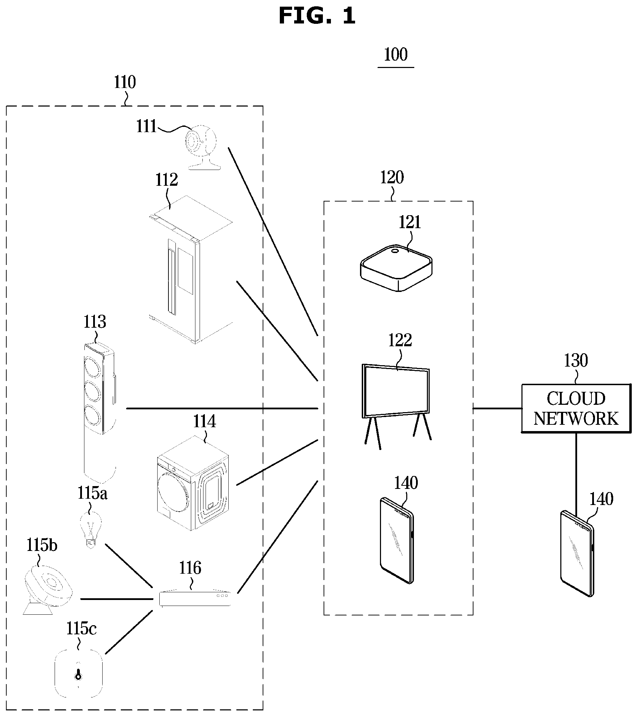

FIG. 1 illustrates a plurality of devices in an Internet of Things (IoT) environment according to an embodiment.

An IoT system 100 according to an embodiment may include at least one leaf device 110, at least one hub device 120 (or an edge device), a cloud network 130, and/or a user device 140.

For example, the leaf device 110, the hub device 120, and/or the user device 140 may be located in close proximity to one another and connected to a single home network (i.e., the same access point (AP)), and the cloud network 130 may be located remotely but connected to the leaf device 110, the hub device 120, and the user device 140 through the Internet. In the disclosure, the leaf device 110 and the hub device 120 of the IoT system 100 may also be referred to as IoT devices.

According to various embodiments, a cloud computing service may be provided using each device of the IoT system. For example, when information about the temperature in a house is obtained from a temperature sensor 115c, the information obtained by the temperature sensor 115c may be provided to the cloud network 130, and the cloud network 130 may confirm an operation mapped to an event of the sensor 115c and transmit a command to turn on an air conditioner 113 to the air conditioner 113.

According to various embodiments, an edge computing service may be provided using each device of the IoT system. The edge computing service may include a technology for transmitting data obtained from a leaf device to a hub device located adjacent to the leaf device and on the same home network, and performing data processings and other services on the hub device. In the disclosure, although a device (e.g., a camera 111, a refrigerator 112, a smart light bulb 115a, a motion sensor 115b, and/or the digital thermometer 115c) that obtains data through a sensor is defined as the leaf device 110, the leaf device 110 may be referred to by other names such as a client device, an end device, a sensor device, an IoT device, or a slave device of the edge computing service. In addition, although defined as a hub device in various embodiments of the disclosure, the hub device may be referred to by other names such as an edge device, an edge server, a server device, a master device, or a service device of the edge computing service.

In the disclosure, devices are classified into the leaf device 110, the hub device 120, and the user device 140 based on functions or operations of each device within the IoT system 100. However, a single device (e.g., a smartphone or a television (TV)) may operate as one of the leaf device 110, the hub device 120, and the user device 140 depending on the case. That is, the names and/or definitions of devices described in various embodiments of the disclosure do not limit the functions and/or operations of the corresponding devices.

According to various embodiments, as an end point of the IoT system 100, the leaf device 110 may collect various information using a sensor and transmit the information to the hub device 120 or the cloud network 130. In addition, the leaf device 110 may perform various operations according to commands transmitted from the hub device 120, the cloud network 130, and/or the user device 140. Referring to FIG. 1, the leaf device 110 may include the camera 111, the refrigerator 112, the air conditioner 113, a washing machine 114, the smart light bulb 115a, the motion sensor 115b, and/or the smart thermometer 115c.

According to various embodiments, at least a portion of the leaf devices 110 (e.g., the camera 111, the refrigerator 112, the air conditioner 113, the washing machine 114) may access the cloud network 130 through the Internet. Among the leaf devices 110, a device (e.g., the light bulb 115a, the motion sensor 115b, or the smart thermometer 115c) that does not support the internet protocol (IP) may transmit obtained information to a relay device 116 through supported non-IP based communication (e.g., Bluetooth, Zigbee), and the relay device 116 may transmit information obtained by each leaf device 115a, 115b, 115c to the cloud network 130 through the Internet.

According to various embodiments, information obtained from the leaf device 110 may be processed by a cloud computing service or an edge computing service. For example, image information obtained from the camera 111, which is a leaf device, may be transmitted to the cloud network, an on/off control command may be transmitted from the cloud network to the light bulb 115a, and/or image information may be provided to the user device 140 in real time. Alternatively, information obtained from the camera 111 may be transmitted to the hub device 120, and an on/off control command or image information may be transmitted from the hub device 120 to a light bulb 123a.

According to various embodiments, the cloud network 130 may include various server devices (e.g., an IoT managing server, an IoT hub server) located on a network and supporting cloud computing services in the IoT system 100. The cloud network 130 may perform computing processing on obtained information received from the leaf device 110 and transmit a command for controlling the leaf device 110.

According to various embodiments, the cloud network 130 may operate and manage a specific device in the home network so that the device may operate as the hub device 120. For example, the cloud network 130 includes an IoT server (e.g., an IoT managing server or an IoT hub server), and the IoT server may perform edge computing services, such as registration, connection, or management of the hub device 120 and the leaf device 110, and may provide modules (e.g., a device module and/or a service module) required for the edge computing service to the hub device 120.

According to various embodiments, the hub device 120 may directly process data received from the leaf device 110 or transmit the data to the cloud network 130 (e.g., an IoT server). The hub device 120 may be a device including hardware and/or software resources required for an edge computing service, such as a TV or a tablet PC. The hub device 120 may be connected to the cloud network 130 through the Internet, and may communicate with the leaf device 110 through direct communication, a mesh network, or an access point.

According to various embodiments, a plurality of hub devices 120 may exist in the home network, and the leaf device 110 may be connected to one of the plurality of hub devices 120 to transmit information. For example, when a specific leaf device 110 is connected, the hub device 120 may download and execute modules (e.g., a device module and/or a service module) required for an edge computing service from the cloud network 130.

According to various embodiments, the hub device 120 may perform a device-specific function (e.g., a video output function of a TV), and may perform an edge computing service through hardware and/or software resources at least partially simultaneously with the performance of a specific function or during idle time when the specific function is not performed.

According to various embodiments, the hub device 120 may store rule information including information for automatic event processing. For example, the rule information may be a rule mapping an operation command for another leaf device in response to a trigger event occurring in a specific leaf device. The hub device 120 may receive the rule information from the cloud network 130 and build a database in the memory of the hub device 120.

According to various embodiments, the user device 140 may provide various user interfaces related to an edge computing service through an application. For example, the user device 140 may receive data (e.g., camera video streaming) obtained from the leaf device 110, or a user input such as connection to the hub device 120 and/or the leaf device 110, or server registration, and may transmit the data or the user input to the cloud network 130. In addition, the user device 140 may display result data (e.g., completion of IoT device authentication) obtained by processing the data in the hub device 120 or the cloud network 130 on a display.

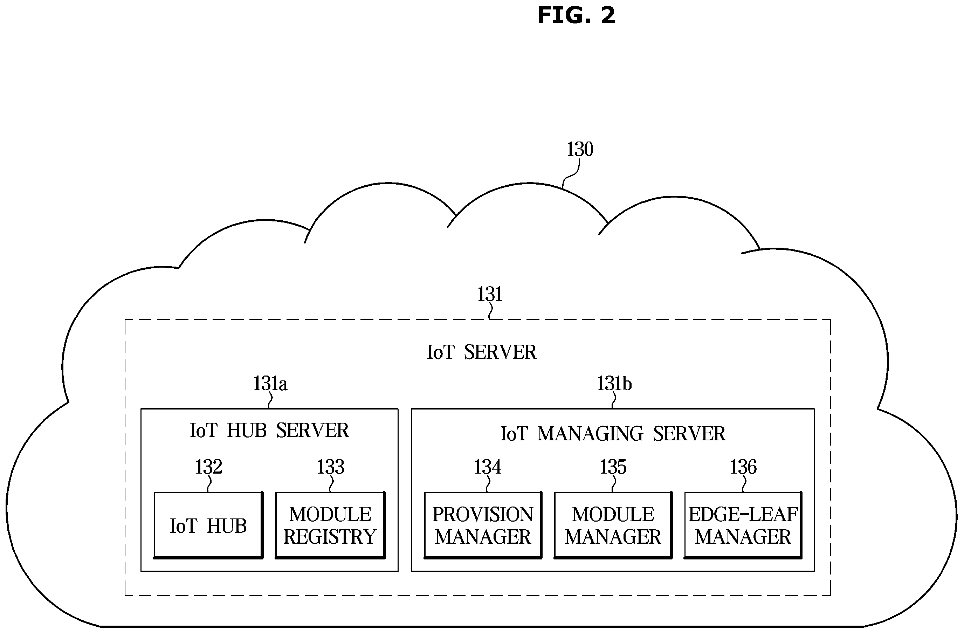

FIG. 2 illustrates an example of an IoT server of an IoT system according to an embodiment.

According to various embodiments, an IoT hub server 131a may support a cloud computing platform and may provide data required for the leaf device 110 and the hub device 120 in a cloud environment to be connected to each other. The IoT hub server 131a may include an IoT hub 132 and a module registry 133.

According to an embodiment, the IoT hub 132 may maintain a connection with the hub device 120, may provide a module stored in the module registry 133 to the hub device 120, and may maintain information about modules installed in several hub devices 120.

According to an embodiment, the module registry 133 may store information about modules (e.g., a device module 123, a service module 124) required to perform an edge computing service.

According to various embodiments, an IoT managing server 131b (e.g., a SmartThings^{™} server) may provide various services for determination, connection, and/or operation of edge computing service, and may include a provision manager 134, a module manager 135, and an edge-leaf manager 136.

According to an embodiment, the provision manager 134 may perform a function of relaying so that the hub device 120 may be connected to the IoT hub server 131a. For example, when the hub device 120 is first registered with the IoT managing server 131b, the provision manager 134 may transmit a connection string to the hub device 120 to connect the hub device 120 to the IoT hub server 131a.

According to an embodiment, the module manager 135 may manage information about various modules required for an edge computing service and various devices supporting each service.

A module required to perform an edge computing service may include the device module 123 that allows the hub device 120 to transmit data received from the leaf device 110 to an external server (e.g., the IoT hub server 131a).

In addition, a module required to perform an edge computing service may include the service module 124 including programs that the hub device 120 executes to implement a service based on data received from the leaf device 110.

According to an embodiment, the edge-leaf manager 136 may manage connection states between hub devices 120 and leaf devices 110 existing in several home networks. For example, when the hub device 120 and the leaf device 110 registered with the IoT managing server 131b are connected to or disconnected from each other, the edge-leaf manager 136 may transmit connection or disconnection information from the hub device 120 and/or the leaf device 110 to the IoT managing server 131b. In this instance, the IoT managing server 131b may store information about which hub device 120 and leaf device 110 are connected and/or what service is being performed in real time.

According to various embodiments, the leaf device 110 may be connected to a specific edge device (e.g., the hub device 121 of FIG. 1) to perform an edge computing service, and then disconnect from the corresponding edge device in response to a handover event and connect to another edge device (e.g., the TV 122 of FIG. 1) to perform an edge computing service. The handover event may include transferring a connection from one device or system to another device or system. In this instance, the IoT managing server 131b may update connection information of the hub device 120 and the leaf device 110 whose connection has been transferred in response to the handover event.

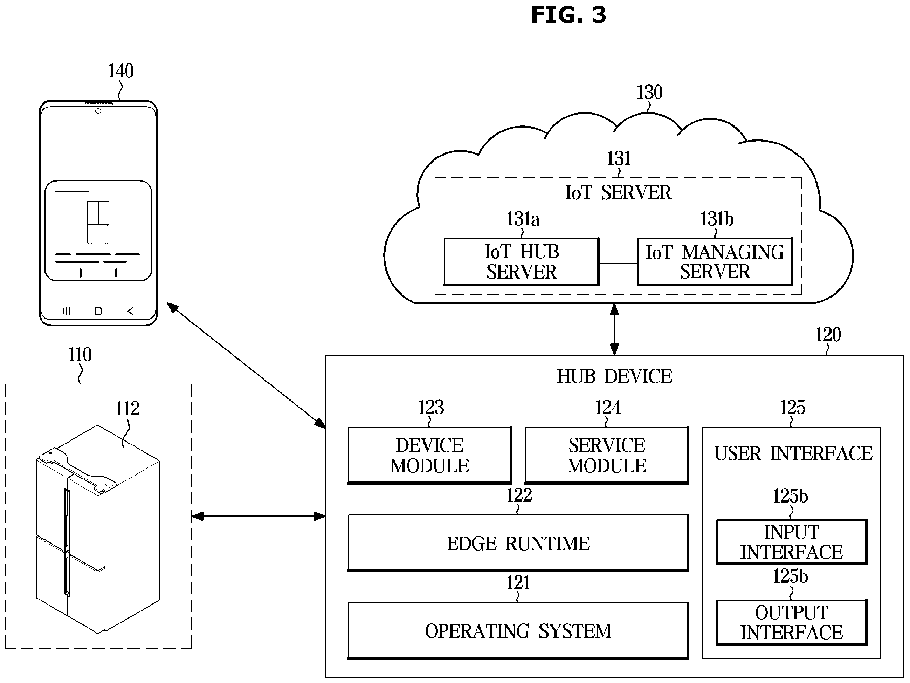

FIG. 3 illustrates an example of each device of an IoT system according to an embodiment.

Referring to FIG. 3, the IoT system (or the cloud computing system, the edge computing system) 100 may include the leaf device 110, the hub device 120, the IoT server 131, and/or the user device 140. The IoT server 131 may include the IoT hub server 131a and the IoT managing server 131b.

As described above with reference to FIG. 1, various IoT devices may exist on a home network, and in FIG. 3, one leaf device 110 (e.g., the refrigerator 112 of FIG. 1) and one hub device 120 (e.g., the user terminal 140 of FIG. 1) will be described as an example.

According to an embodiment, the hub device 120 may have device-specific functions and include hardware and/or software configurations (e.g., an edge runtime and/or a basic module) for an edge computing service, such as a TV, a tablet PC, or a laptop PC. The hub device 120 may perform an edge computing service through hardware and/or software resources at least partially simultaneously with the performance of a specific function or during idle time when the specific function is not performed.

An edge runtime 122 and a basic module for edge computing may be installed in the hub device 120 through a manufacturing process of the hub device 120 or a software upgrade. For example, the edge runtime 122 may include a daemon program for communication with an IoT server, and the basic module may be configured as a container including a program required for communication with the IoT server. For example, the basic module may be a container installed in the edge runtime 122 environment.

According to various embodiments, the hub device 120 may receive and install at least one module for performing an edge computing service from the IoT hub server 131a in response to being connected to a specific leaf device 110.

The at least one module may be determined according to the type of the connected leaf device 110 and/or the type of service that may be performed. For example, the at least one module may include the device module 123 corresponding to the connected leaf device 110 and/or the service module 124 corresponding to the type of service to be performed.

When the hub device 120 is connected to a plurality of leaf devices 110, device modules 123 (e.g., the first device module 123a, the second device module 123b, etc.) corresponding to each of the leaf devices 110 may be installed.

The hub device 120 may be connected to the IoT hub server 131a by executing the edge runtime 122 in a provision process, and the at least one module may be additionally installed and executed according to the type of the leaf device 110. The hub device 120 may activate or deactivate an edge mode based on a command received from the IoT hub server 131a or the IoT managing server 131b. When the edge mode is deactivated, the hub device 120 may perform only its specific function (e.g., a video output function of a TV), and the device module 123 and the service module 124 may not be executed.

According to various embodiments, the leaf device 110 may transmit information obtained using a sensor to the connected hub device 120 or the cloud network 130 (e.g., the IoT managing server 131b and/or the IoT hub server 131a). For example, in the case of the refrigerator 112 operating as the leaf device 110, the refrigerator 112 may be connected to the hub device 120 and transmit information about the temperature inside a chamber of the refrigerator 112 to the hub device 120.

According to various embodiments, the user device 140 may include a display capable of displaying a user interface (UI). The user device 140 may install and/or execute an application for an edge computing service, and receive content and/or notifications generated by the leaf device 110 through the application. In other words, when the hub device 120 and the leaf device 110 are connected, content or notifications generated by the leaf device 110 may be transmitted to the user device 140 through the hub device 120.

According to various embodiments, the functions of the IoT hub server 131a or the IoT managing server 131b may be performed by one server device (e.g., the IoT server 131 of FIG. 3). Alternatively, the above functions may be performed by three or more server devices. For example, each component of the IoT hub server 131a and the IoT managing server 131b of FIG. 2 may be distributed across three or more server devices on a network, or some operations performed in each component may be performed by several server devices in a distributed manner.

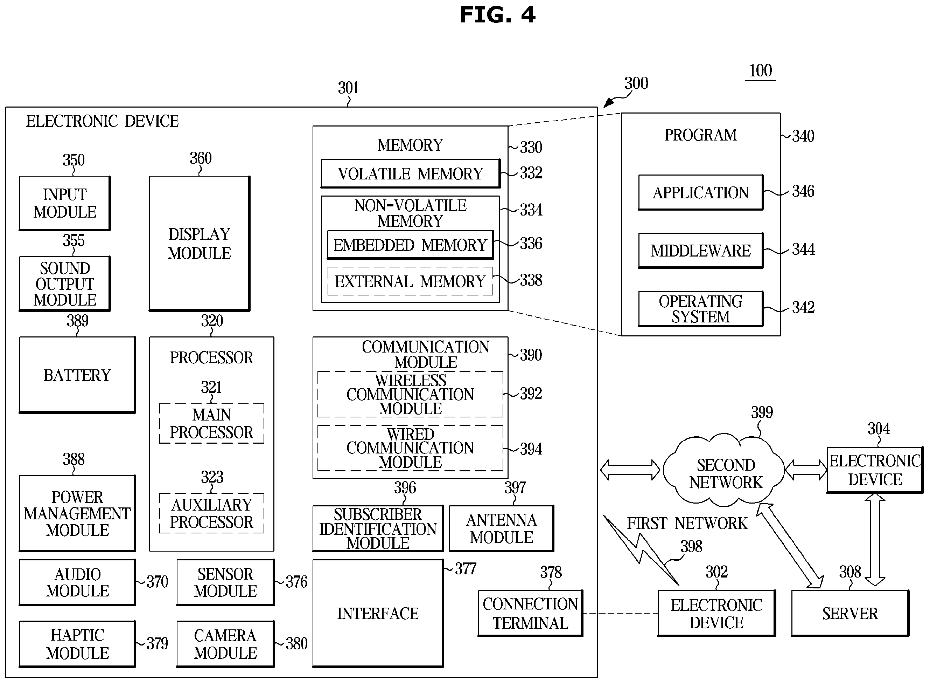

FIG. 4 is a block diagram schematically illustrating an electronic device in an IoT environment according to an embodiment.

As described above, in the IoT system 100, a single device may operate as an IoT device (e.g., the leaf device 110, the hub device 120 of FIG. 1) and as a user device (e.g., the user device 140 of FIG. 1). Hereinafter, the configuration and/or function of an electronic device 301 that may operate as an IoT device and/or a user device will be described in detail with reference to FIG. 3.

Referring to FIG. 4, in a network environment 300, the electronic device 301 may communicate with an electronic device 302 via a first network 398 (e.g., a short-range wireless communication network), or may communicate with at least one of an electronic device 304 or a server 308 via a second network 399 (e.g., a long-range wireless communication network). According to an embodiment, the electronic device 301 may communicate with the electronic device 304 through the server 308.

According to an embodiment, the electronic device 301 may include a processor 320, a memory 330, an input module 350, a sound output module 355, a display module 360, an audio module 370, a sensor module 376, an interface 377, a connection terminal 378, a haptic module 379, a camera module 380, a power management module 388, a battery 389, communication circuitry 390, a subscriber identification module 396, and/or an antenna module 397.

In the electronic device 301, at least one of the above-described components (e.g., the connection terminal 378) may be omitted, or one or more other components may be added. In addition, in the electronic device 301, some (e.g., the sensor module 376, the camera module 380, or the antenna module 397) of these components may be integrated into one component (e.g., the display module 360).

The processor 320 may execute software (e.g., a program 340) to control at least one other component of the electronic device 301 connected to the processor 320, and may perform various data processing or operations. In this instance, the components of the electronic device 301 connected to the processor 320 may include hardware or software components.

According to an embodiment, as at least part of data processing or operation, the processor 320 may store commands or data received from another component (e.g., the sensor module 376 or the communication circuitry 390) in a volatile memory 332, may process the commands or data stored in the volatile memory 332, and may store result data in a non-volatile memory 334. In this instance, the data received from other components may include information obtained by the sensor module 376.

According to an embodiment, the processor 320 may include a main processor 321 (e.g., a central processing unit or an application processor) or an auxiliary processor 323 (e.g., a graphics processing unit, a neural processing unit (NPU), an image signal processor, a sensor hub processor, or a communication processor) capable of operating independently or together with the main processor 321. For example, in a case where the electronic device 301 includes the main processor 321 and the auxiliary processor 323, the auxiliary processor 323 may use lower power than the main processor 321, or may be specialized for a designated function. The auxiliary processor 323 may be implemented separately from the main processor 321 or as a part thereof.

For example, the auxiliary processor 323 may control at least some of functions or states related to at least one component (e.g., the display module 360, the sensor module 376, or the communication circuitry 390) among the components of the electronic device 301, instead of the main processor 321 while the main processor 321 is in an inactive (e.g., sleep) state, or together with the main processor 321 while the main processor 321 is in an active (e.g., application execution) state. The auxiliary processor 323 (e.g., an image signal processor or a communication processor) may be implemented as part of another functionally related component (e.g., the camera module 380 or the communication circuitry 390).

According to an embodiment, the auxiliary processor 323 (e.g., a neural processing unit) may include a hardware structure specialized for processing an artificial intelligence (AI) model. The AI model may be generated through machine learning. Such learning may be performed, for example, in the electronic device 301 itself in which the AI model is executed, or may be performed through a separate server (e.g., the server 308). Learning algorithms may include, for example, supervised learning, unsupervised learning, semi-supervised learning, or reinforcement learning, but are not limited to the above-described examples. The AI model may include a plurality of artificial neural network layers. The artificial neural network may be one of a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-networks, or a combination of two or more of the above, but is not limited to the above-described examples. The AI model may include a software structure in addition to or as an alternative to a hardware structure.

The memory 330 may store various data obtained or used by at least one component (e.g., the processor 320 or the sensor module 376) of the electronic device 301. For example, data may include software (e.g., the program 340), and input data or output data for commands related thereto. The memory 330 may include the volatile memory 332 or the non-volatile memory 334.

The program 340 may be stored as software in the memory 330, and may include, for example, an operating system 342, middleware 344, or an application 346.

The input module 350 may receive a command or data to be used for a component (e.g., the processor 320) of the electronic device 301 from the outside (e.g., a user) of the electronic device 301. The input module 350 may include, for example, a microphone, a mouse, a keyboard, a key (e.g., a button), or a digital pen (e.g., a stylus pen).

The sound output module 355 may output a sound signal to the outside of the electronic device 301. The sound output module 355 may include, for example, a speaker or a receiver. The speaker may be used for multimedia playback or recording playback. The receiver may be used to receive incoming calls. According to an embodiment, the receiver may be implemented separately from the speaker or as a part thereof.

The display module 360 may visually provide information to the outside (e.g., a user) of the electronic device 301. The display module 360 may include, for example, a display, a hologram device, or a projector and a control circuit for controlling the device. In addition, the display module 360 may include a touch sensor set to detect touch, or a pressure sensor set to measure the strength of force generated by touch.

The audio module 370 may convert sound into an electrical signal, or vice versa. The audio module 370 may obtain sound through the input module 350, or may output sound through the sound output module 355 or an external electronic device (e.g., the electronic device 302) (e.g., a speaker or a headphone) connected directly or wirelessly with the electronic device 301.

The sensor module 376 may detect an operating state (e.g., power or temperature) of the electronic device 301 or an external environmental state (e.g., a user state), and may generate an electrical signal or data value corresponding to the detected state. According to an embodiment, the sensor module 376 may include, for example, a gesture sensor, a gyro sensor, a barometric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 377 may support one or more designated protocols that may be used for the electronic device 301 to be connected directly or wirelessly with an external electronic device (e.g., the electronic device 302). According to an embodiment, the interface 377 may include, for example, a high definition multimedia interface (HDMI), a universal serial bus (USB) interface, a secure digital (SD) card interface, or an audio interface.

The connection terminal 378 may include a connector through which the electronic device 301 may be physically connected to an external electronic device (e.g., the electronic device 302). According to an embodiment, the connection terminal 378 may include, for example, an HDMI connector, a USB connector, an SD card connector, or an audio connector (e.g., a headphone connector).

The haptic module 379 may convert an electrical signal into a mechanical stimulus (e.g., vibration or movement) or an electrical stimulus that a user may perceive through tactile or kinesthetic sense. According to an embodiment, the haptic module 379 may include, for example, a motor, a piezoelectric element, or an electrical stimulation device.

The camera module 380 may capture still images and moving images. According to an embodiment, the camera module 380 may include one or more lenses, image sensors, image signal processors, or flashes.

The power management module 388 may manage power supplied to the electronic device 301. According to an embodiment, for example, the power management module 388 may be implemented as at least part of a power management integrated circuit (PMIC).

The battery 389 may supply power to at least one component of the electronic device 301. According to an embodiment, the battery 389 may include, for example, a non-rechargeable primary cell, a rechargeable secondary cell, or a fuel cell.

The communication circuitry 390 may support establishment of a direct (e.g., wired) communication channel or a wireless communication channel between the electronic device 301 and an external electronic device (e.g., the electronic device 302, the electronic device 304, or the server 308), and may support performing communication through the established communication channel. The communication circuitry 390 may include one or more communication processors operating independently of the processor 320 (e.g., an application processor) and supporting direct (e.g., wired) communication or wireless communication. According to an embodiment, the communication circuitry 390 may include wireless communication circuitry 392 (e.g., cellular communication circuitry, short-range wireless communication circuitry, or global navigation satellite system (GNSS) communication circuitry) or wired communication circuitry 394 (e.g., local area network (LAN) communication circuitry, or power line communication circuitry). Among these communication circuitry, corresponding communication circuitry may communicate with the external electronic device 304 via the first network 398 (e.g., a short-range communication network such as Bluetooth, Wi-Fi direct, or infrared data association (IrDA)) or the second network 399 (e.g., a long-range communication network such as a legacy cellular network, a 5G network, a next-generation communication network, the internet, or a computer network (e.g., LAN or WAN)). These various types of communication circuitry may be integrated into one component (e.g., a single chip) or implemented as a plurality of separate components (e.g., multiple chips). The wireless communication circuitry 392 may identify or authenticate the electronic device 301 within a communication network such as the first network 398 or the second network 399 using subscriber identity information (e.g., international mobile subscriber identity (IMSI)) stored in the subscriber identification module 396.

The wireless communication circuitry 392 may support a 5G network after a 4G network and a next-generation communication technology, for example, a new radio (NR) access technology. The NR access technology may support enhanced mobile broadband (eMBB)), massive machine-type communications (mMTC)), or ultra-reliable and low-latency communications (URLLC)). The wireless communication circuitry 392 may support, for example, a high frequency band (e.g., mmWave band) to achieve a high data rate. The wireless communication circuitry 392 may support various technologies for securing performance in a high frequency band, for example, beamforming, massive multiple-input and multiple-output (massive MIMO), full dimensional MIMO (FD-MIMO), an array antenna, analog beam-forming, or a large scale antenna. The wireless communication circuitry 392 may support various requirements specified in the electronic device 301, an external electronic device (e.g., the electronic device 304), or a network system (e.g., the second network 399). According to an embodiment, the wireless communication circuitry 392 may support a peak data rate (e.g., 20 Gbps or greater) to support eMBB, loss coverage (e.g., 164 dB or less) to support mMTC, or U-plane latency (e.g., 0.5 ms or less for each of downlink (DL) and uplink (UL), or 1 ms or less for a round trip) to support URLLC.

The antenna module 397 may transmit signals or power to the outside (e.g., an external electronic device) or receive signals or power from the outside. According to an embodiment, the antenna module 397 may include an antenna including a radiator formed of a conductive material or a conductive pattern formed on a substrate (e.g., printed circuit board (PCB)). According to an embodiment, the antenna module 397 may include a plurality of antennas (e.g., an array antenna). In this case, at least one antenna, suitable for a communication method used in a communication network such as the first network 398 or the second network 399, may be selected from the plurality of antennas by the communication circuitry 390. Signals or power may be transmitted or received between the communication circuitry 390 and an external electronic device through the selected at least one antenna. According to embodiments, other components (e.g., a radio frequency integrated circuit (RFIC)) other than the radiator may be additionally formed as part of the antenna module 397.

According to various embodiments, the antenna module 397 may form an mmWave antenna module. According to an embodiment, the mmWave antenna module may include a printed circuit board, an RFIC disposed on or adjacent to a first surface (e.g., a bottom surface) of the printed circuit board and capable of supporting a designated high frequency band (e.g., mmWave band), and a plurality of antennas (e.g., an array antenna) disposed on or adjacent to a second surface (e.g., a top surface or a side surface) of the printed circuit board and capable of transmitting or receiving signals of the designated high frequency band.

At least a portion of the above components may be connected to each other through a communication method between peripheral devices (e.g., a bus, general purpose input and output (GPIO), serial peripheral interface (SPI), or mobile industry processor interface (MIPI)), and may exchange signals (e.g., commands or data) with each other.

According to an embodiment, commands or data may be transmitted or received between the electronic device 301 and the external electronic device 304 through the server 308 connected to the second network 399. Each of the external electronic devices 302 or 304 may be the same or a different type of device as the electronic device 301. According to an embodiment, all or part of the operations performed in the electronic device 301 may be executed in one or more of the external electronic devices 302, 304, or 308. For example, when the electronic device 301 is required to perform a function or service automatically or in response to a request from a user or another device, the electronic device 301 may request one or more external electronic devices to perform at least part of the function or service, instead of or in addition to executing the function or service itself. One or more external electronic devices receiving the request may execute at least part of the requested function or service, or an additional function or service related to the request, and may return the result of the execution to the electronic device 301. The electronic device 301 may process the result as received or perform additional processing, and may provide the result as at least part of a response to the request. To this end, for example, cloud computing, distributed computing, mobile edge computing (MEC), or client-server computing technology may be used. The electronic device 301 may provide an ultra-low latency service using, for example, distributed computing or mobile edge computing. In another embodiment, the external electronic device 304 may include an Internet of Things (IoT) device. The server 308 may be an intelligent server using machine learning and/or a neural network. According to an embodiment, the external electronic device 304 or the server 308 may be included in the second network 399. The electronic device 301 may be applied to intelligent services (e.g., smart home, smart city, smart car, or health care) based on 5G communication technology and IoT-related technology.

Electronic devices according to various embodiments of the disclosure may be devices of various forms. The electronic device may include, for example, a portable communication device (e.g., a smartphone), a computer device, a portable multimedia device, a portable medical device, a camera, a wearable device, or a home appliance. Electronic devices according to embodiments of the disclosure are not limited to the above-described examples.

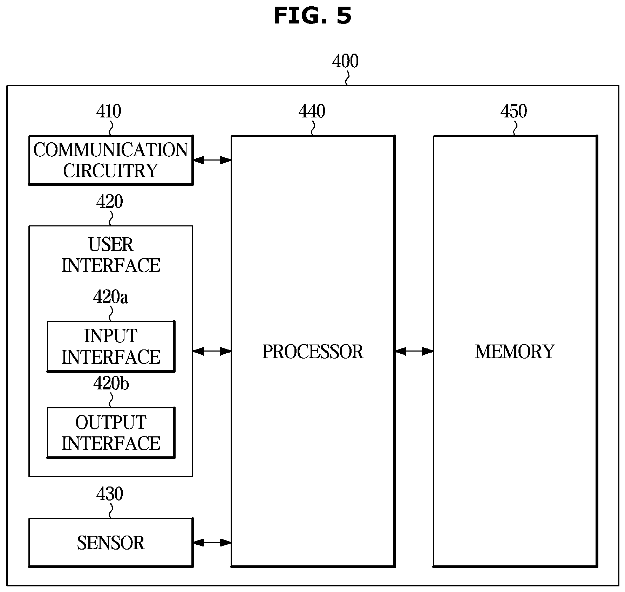

FIG. 5 is a control block diagram of an electronic device according to an embodiment.

Referring to FIG. 5, an electronic device 400 may include communication circuitry 410, a user interface 420, a sensor 430, a processor 440, and a memory 450. The electronic device 400 may further include at least a portion of the components and/or functions of the electronic device 301 of FIG. 3. In addition, various embodiments of the disclosure may be implemented even when a portion of the illustrated components are omitted or replaced. According to various embodiments, the electronic device 400 may be implemented as any one device on an IoT system (e.g., the IoT system 100 of FIG. 1). For example, the electronic device 400 may be one of the hub device 120 or the leaf device 110 of the IoT system.

Similar to a smartphone or a tablet PC, the electronic device 400 may include the sensor 430 including various sensors (e.g., a camera, an illuminance sensor, or a microphone) and may include at least one or more processor and/or memory resources. In this case, the electronic device 400 may provide an IoT service by installing and executing an application supporting the IoT service.

The communication circuitry 410 may support wireless communication (e.g., Wi-Fi, cellular communication), and may transmit and receive data to and from other electronic devices in the IoT system or a cloud network. The communication circuitry 410 may include the communication circuitry 390 and/or the antenna module 397 of FIG. 4.

The communication circuitry 410 may communicate with another device through an access point (AP), or may directly communicate with another device using D2D (e.g., Bluetooth) or P2P (e.g., Wi-Fi Direct or Wi-Fi Aware) communication.

The user interface 420 may provide information required for providing an IoT service to the outside (e.g., a user) of the electronic device 400 as visual information or voice information.

The user interface 420 may include the display module 360, the input module 350, the sound output module 355, the audio module 370, and/or the sensor module 376 of FIG. 4.

According to an embodiment, the user interface 420 may include a touch screen including a touch-sensing circuit (or a touch sensor) (not shown), a pressure sensor capable of measuring touch strength, and/or a touch panel (e.g., a digitizer) capable of detecting a magnetic stylus pen.

In this instance, the touch screen may include a liquid crystal display (LCD), an organic light emitted diode (OLED), an active matrix organic light emitted diode (AMOLED), a flexible display, or an expandable display, but is not limited thereto.

According to an embodiment, the user interface 420 may provide guidance on an authentication operation of the electronic device 400 through various visual information.

Specifically, the user interface 420 may include a microphone, a mouse, a keyboard, or a key (e.g., a button) for receiving commands or data to be used for the authentication operation of the electronic device 400 from the outside (e.g., a user) of the electronic device 400. In addition, the user interface 420 may include a speaker to provide various information and/or guidance for guiding the authentication operation through voice information.

According to an embodiment, the user interface 420 may include at least one input interface 420a and at least one output interface 420b.

The at least one input interface 70a may include, for example, a tact switch, a push switch, a slide switch, a toggle switch, a micro switch, a touch switch, a touch pad, a touch screen, a jog dial, and/or a microphone.

In the disclosure, a 'button' may be replaced with a user interface element (UI element), a tact switch, a push switch, a slide switch, a toggle switch, a micro switch, a touch switch, a touch pad, a touch screen, a jog dial, and/or a microphone.

The at least one output interface 70b may provide various information related to the authentication operation to the user by generating sensory information.

For example, the at least one output interface 70b may output a description of an action (operation) required for device authentication. In addition, the at least one output interface 70b may include a visual indicator for the action required for device authentication.

In this instance, the visual indicator may include at least one of an illustration, a graphic guide, or a visual reference.

The electronic device 400 may include at least one sensor 430. For example, the electronic device 400 may include the sensor 430 such as a camera, an illuminance sensor, a motion sensor, or a microphone. The electronic device 400 may transmit information obtained through the sensor 430 to a cloud network or another electronic device. Accordingly, an IoT system that controls other devices on a local network based on a cloud (or edge) may be provided.

The memory 450 may include a volatile memory and a non-volatile memory, and may temporarily or permanently store various data used in at least one component (e.g., the processor 440) of the electronic device 400. The memory 450 may store various instructions that may be performed in the processor 440. Such instructions may include various control commands including arithmetic and logic operations, data movement, or input/output that may be recognized by the processor 440.

The processor 440 may perform operations or data processing related to control and/or communication of each component of the electronic device 400, and may be operatively, functionally, and/or electrically connected to each component of the electronic device 400 such as the communication circuitry 410, the user interface 420, the sensor 430, and/or the memory 450.

According to various embodiments, operations and data processing functions that the processor 440 may perform within the electronic device 400 are not limited. However, hereinafter, various embodiments for self-onboarding to register the electronic device 400 with a cloud network in real time without a separate registration process in advance will be described. The operations of the processor 440 to be described below may be performed by executing instructions stored in the memory 450.

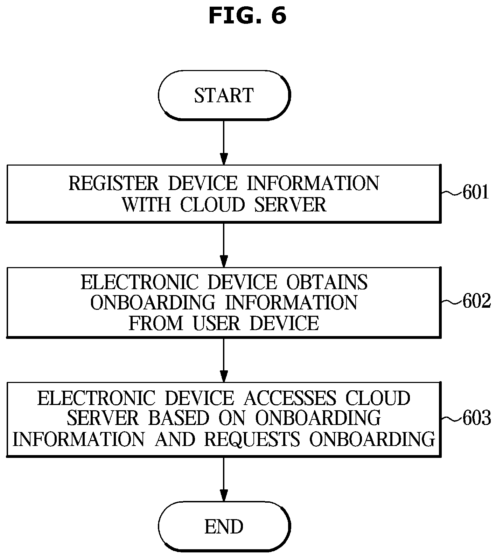

FIG. 6 is a flowchart illustrating an example of an onboarding method of an IoT device according to an embodiment.

A manufacturer of an electronic device (e.g., the electronic device 400 of FIG. 5) may pre-register device information and authentication information of the electronic device 400 in the IoT system 100 with the cloud network 130, and may allow the electronic device 400 to establish communication with a user device (e.g., the user device 140 of FIG. 1) via Bluetooth or a soft access point (softAP) mode and request onboarding to the cloud network 130 through the user device 140.

Specifically, according to an embodiment, the manufacturer of the electronic device 400 may pre-register authentication information and device information of the electronic device 400 with the cloud network 130 (601). For example, during the manufacturing process of the electronic device 400, the cloud network may provide authentication and registration services for the electronic device 400. The manufacturer may register the authentication information and device information of the electronic device 400 through a provided online environment.

Specifically, the manufacturer of the electronic device 400 may access the provided online environment, and may register device information of the electronic device 400 such as a device type and profile information, and authentication information such as ED25519 and X.509. In addition, the manufacturer of the electronic device 400 may update device information and onboarding configuration information using a software development kit (SDK) of the IoT device, and store software required for cloud services.

Thereafter, a user who has purchased the electronic device 400 may proceed with a process of onboarding the electronic device 400 to the cloud network.

Specifically, the electronic device 400 may obtain onboarding information from the user device 140 to perform onboarding (602). The onboarding information is information required to connect and authenticate the electronic device 400 to the cloud network 130, and may include credential information.

The credential information may include Wi-Fi provisioning information, cloud provisioning information, and device setting provisioning information.

For example, the Wi-Fi provisioning information includes a subsystem identification (SSID) and a password of an access point to be connected stored in the user device, and the cloud provisioning information includes a broker uniform resource locator (URL) to be connected and authentication information obtained by the user device from the cloud network. The device setting provisioning information may include additional information such as a location, language, country code, time zone, model name, or device name entered through the user device.

The electronic device 400 may access the cloud network 130 based on the onboarding information received from the user device 140, and request onboarding (603).

According to an embodiment, in a case where the electronic device 400 does not provide an input function for device setting information such as a location or a device name, the user is required to enter the corresponding information through the user device 140. To this end, the electronic device 400 enters a softAP mode, and the user device 140 may access the softAP and provide device setting provisioning information and cloud provisioning information.

According to various embodiments, the electronic device 400 may enter a discoverable mode via Bluetooth (or Bluetooth Low Energy (BLE)) advertising, and the user device 140 may select the electronic device 400 that has entered the discoverable mode via BLE scan and proceed with the above-described setup process.

In order for the electronic device 400 to be onboarded to the cloud server 130, onboarding information (e.g., credential information) is required to be obtained from the user device through device authentication of the electronic device 400.

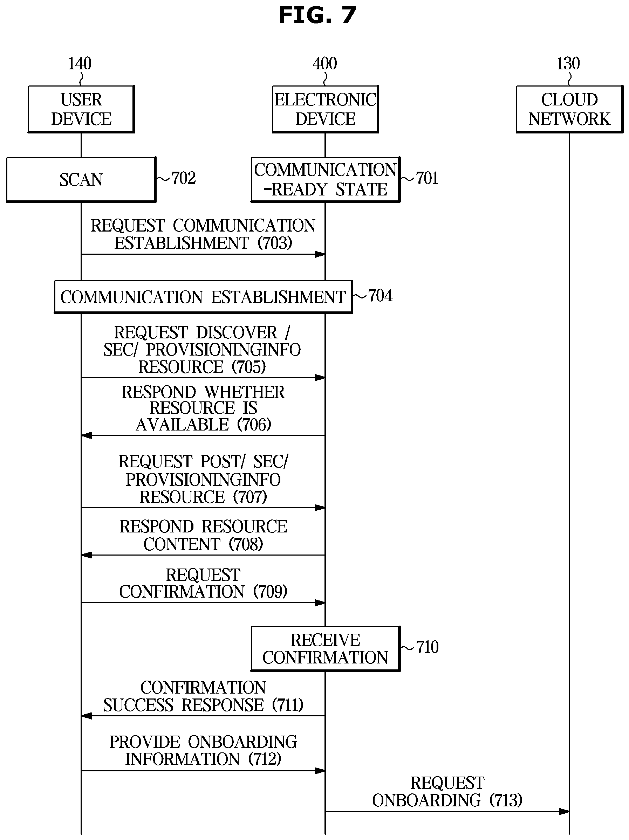

Hereinafter, a device authentication process of the electronic device 400 for onboarding of the electronic device 400 and a guide provided to the user in the device authentication process will be described with reference to FIG. 7.

FIG. 7 illustrates an example of a device authentication process of an electronic device for onboarding of the electronic device according to an embodiment.

According to an embodiment, the electronic device 400 may activate a communication-ready state for device authentication (701). For example, the electronic device 400 may start BLE advertising.

In this instance, the electronic device 400 may activate the communication-ready state based on a user's input or request. In addition, the electronic device 400 may also activate the communication-ready state based on power being applied even without a user's input or request.

When the communication-ready state is activated, the electronic device 400 may periodically transmit broadcast packets using BLE advertising.

The broadcast packet may include a universally unique identifier (UUID), service information, data, and the like of the electronic device 400. In addition, the broadcast packet may include information about a service or profile of the electronic device 400, for example, whether an audio output service is provided and whether a heart rate measurement service is provided.

In addition, the broadcast packet may include information about whether the user device 140 supports a service for default device authentication.

In addition, activation of the communication-ready state of the electronic device 400 may include activating a soft access point (SoftAP). Activating the softAP includes the electronic device 400 operating as a Wi-Fi access point without a separate device functioning as a router or an access point. That is, the electronic device 400 may establish a Wi-Fi network by itself, and allow other electronic devices (e.g., the user device 140) to connect to the corresponding network.

The user device 140 may identify the electronic device 400 whose communication standby state is activated through scanning (702).

When the electronic device 400 is identified, the user device 140 requests a communication establishment based on identification information or preset password information of the electronic device 400 (703), and the electronic device 400 receiving the request establishes communication based on the received identification information or preset password information (704).

In this instance, the established communication may be one of Wi-Fi communication, Bluetooth communication, Bluetooth Low Energy communication, and/or Zigbee communication.

When communication is established between the user device 140 and the electronic device 400, the user device 140 and the electronic device 400 may exchange information or resources for device authentication several times.

For example, the user device 140 may request a resource related to whether the electronic device 400 has specific information (705). For example, the specific information may include provisioning information (sec/provisioninginfo in FIG. 7) including security information such as security settings, authentication, encryption, and key exchange.

In response, the electronic device 400 may confirm whether the electronic device 400 has the resource requested by the user device 140. In a case where the electronic device 400 may provide the corresponding resource, the electronic device 400 may provide, to the user device 140, a response indicating that the corresponding resource is available (706).

In addition, the user device 140 may request a resource related to the specific information in order to obtain the specific information from the electronic device 400 or update the specific information (707). For example, the specific information may include provisioning information related to security (sec/provisioninginfo in FIG. 7).

In response, after receiving the request from the user device 140, the electronic device 400 may provide the content of the resource related to the specific information (707).

In other words, the user device 140 and the electronic device 400 exchange data several times for device authentication, and may negotiate a device authentication method through the process.

After exchanging information or resources with the electronic device 400 several times (705 to 708), the user device 140 may determine a device authentication method, and transmit a confirmation request for device authentication based on the determined authentication method to the electronic device 400 (709).

Confirmation may be obtained through a user action or without user intervention.

For example, in a case where the electronic device 400 is the refrigerator 112, the user device 140 may request a user to open/close a door of the refrigerator 112 once for confirmation of device authentication, or request a user to press a preset button for a preset time.

In addition, in a case where the electronic device 400 is the refrigerator 112, the user device 140 may request an authentication signal including infrared codeset information for device authentication for confirmation.

The electronic device 400 may receive a confirmation input (confirmation), in response to receiving the confirmation request (710).

Receiving the confirmation input by the electronic device 400 may include receiving an operation for device authentication from the user (e.g., receiving a user input through a user interface 1120) and/or performing an operation for confirmation without user intervention (e.g., transmitting an authentication signal including infrared codeset information).

In response to receiving the confirmation input, the electronic device 400 may provide a confirmation success response to the user device 140 (711).

Based on receiving the confirmation success response from the electronic device 400, the user device 140 may determine that device authentication is completed.

Accordingly, the user device 140 may provide onboarding information to the electronic device 400 (712).

The electronic device 400 may request onboarding to the cloud network 130 based on the received onboarding information (713).

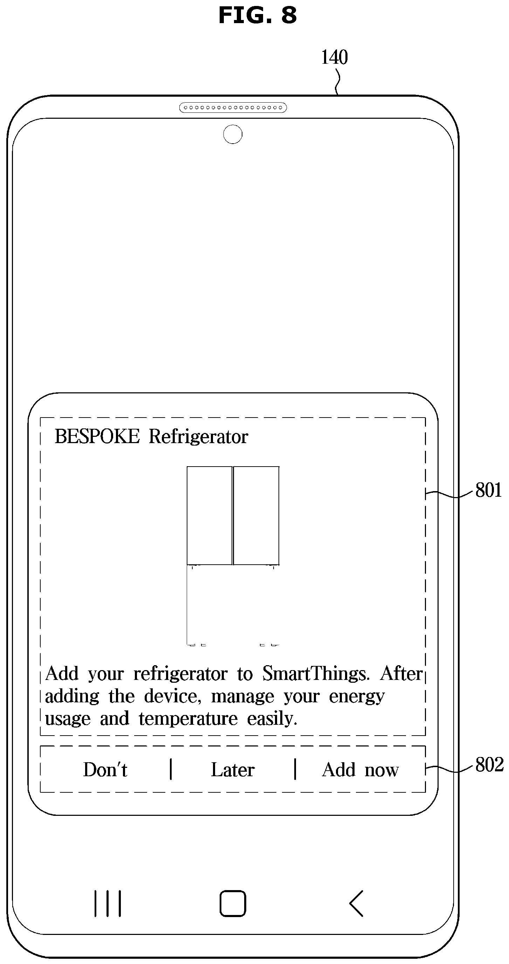

During the above-described process, the user device 140 or the electronic device 400 may provide a guide for device authentication to the user, which will be described below with reference to FIG. 8 to FIG. 11.

FIG. 8 illustrates an example of a screen displayed on a user interface of a user device after an electronic device is identified according to an embodiment.

The user device 140 may include a user interface (e.g., the user interface 420 of FIG. 4) and/or a processor (e.g., the processor 440 of FIG. 4). The user interface of the user device 140 may include an input interface (e.g., the input interface 420a of FIG. 4) and/or an output interface (e.g., the output interface 420b of FIG. 4).

For convenience of description, the user interface of the user device 140 is referred to as a first interface 1420, and the processor of the user device 140 is referred to as a first processor 1440. In addition, the input interface of the user device 140 is referred to as a first input interface 1420a, and the output interface of the user device 140 is referred to as a first output interface 1420b.

According to an embodiment, when the electronic device 400 is identified in the scanning operation 702 of FIG. 7, the first processor 1440 may control the first interface 1420 to display the screen shown in FIG. 8.

Referring to FIG. 8, the first processor 1440 may control the first user interface 1420 to display the electronic device 400 identified through scanning.

Displaying the identified electronic device 400 on the first user interface 1420 may include displaying a name or an indicator (e.g., an icon) representing the identified electronic device 400.

For example, in a case where the identified electronic device 400 is the refrigerator 112, the first processor 1440 may control the first user interface 1420 to display 'BESPOKE Refrigerator' representing the identified refrigerator 112 or an icon representing the refrigerator on the output interface 1420b (801).

In addition, the first processor 1440 may control the first user interface 1420 to display at least one button for receiving, from a user, an instruction indicating whether to establish a connection with the identified electronic device 400.

As described above, in the disclosure, a 'button' may be replaced with a UI element, a tact switch, a push switch, a slide switch, a toggle switch, a micro switch, a touch switch, a touch pad, a touch screen, a jog dial, and/or a microphone.

For example, the first processor 1440 may control the first user interface 1420 to display buttons for receiving user instructions indicating whether to decline the connection with the identified refrigerator 112, whether to establish a connection now, or whether to establish a connection later via the input interface 1420a (802).

The first processor 1440 may control the first user interface 1420 to omit and display some of the above-described components. Also, in addition to the above-described components, other components required for providing information about the identified electronic device 400 to the user and receiving an instruction on whether to perform communication establishment with the identified electronic device 400 from the user may be additionally displayed.

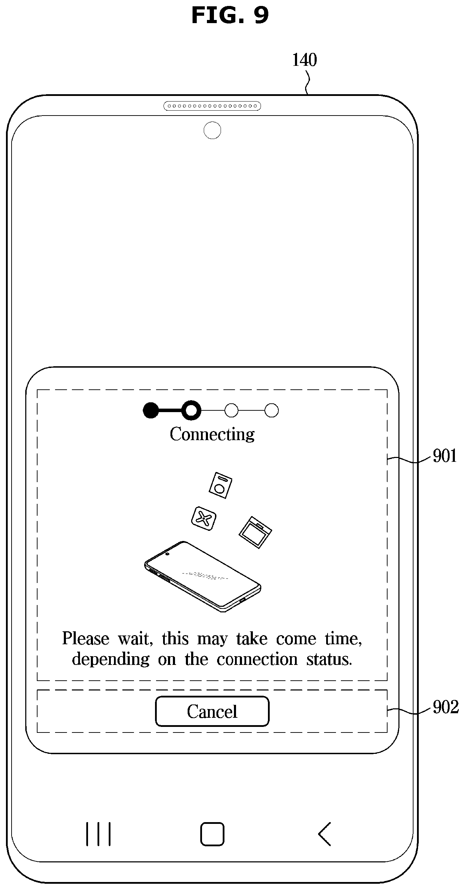

FIG. 9 illustrates an example of a screen displayed on a user interface of a user device while data communication for negotiating a device authentication method is performed according to an embodiment.

According to an embodiment, after communication with the electronic device 400 is established, the first processor 1440 may control the first interface 1420 to display the screen shown in FIG. 9 in the operations 705 to 708 of performing data communication for negotiating the device authentication method of FIG. 7.

According to various embodiments, the first processor 1440 may control the first interface 1420 to display the screen shown in FIG. 9, not only in the operations 705 to 708 of performing data communication for negotiating the device authentication method, but also in the operations 703 to 704 of establishing communication.

Referring to FIG. 9, the first processor 1440 may control the first user interface 1420 to display that communication is currently being established between the electronic device 400 and the user device 140, and that data exchange for negotiating the device authentication method is being performed. In this instance, a user is required to wait until the data exchange for negotiating the device authentication method is completed.

For example, referring to FIG. 9, the first processor 1440 may control the first user interface 1420 to display the time required to negotiate the device authentication method and/or the remaining time until the data exchange for negotiating the device authentication method is completed via a bar-type indicator (901).

In addition, the first processor 1440 may control the first user interface 1420 to display at least one button for receiving a user instruction indicating whether to continue performing the device authentication operation.

In this instance, the device authentication operation may include at least one of an operation for communication establishment or an operation for negotiating the device authentication method.

For example, referring to FIG. 9, the first processor 1440 may control the first interface 1420 to display a button (e.g., a cancel button) for receiving a user instruction to cancel the ongoing device authentication operation on the first output interface 1420b (902).

For example, when the user presses the button for receiving a user instruction to cancel the device authentication operation, the first processor 1440 may cancel the ongoing operation for communication establishment or the ongoing operation for negotiating the device authentication method.

In this instance, canceling the ongoing operation may refer to disconnecting the user device 140 from the electronic device 400, or stopping data communication for negotiating the device authentication method.

As the data communication for negotiating the device authentication method takes a long time, the likelihood that the user will press the cancel button during the process may increase.

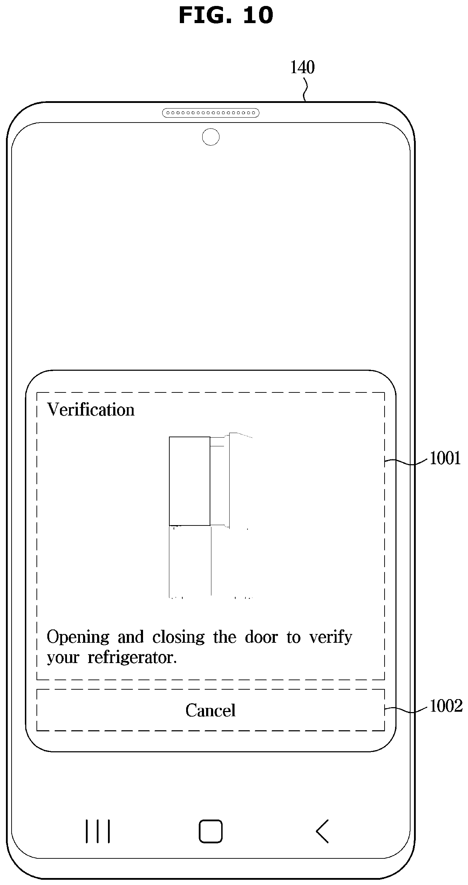

Thus, in order to improve customer experience by preventing the user from waiting for a long time, the screen shown in FIG. 9 may be prevented from being displayed or its displayed time may be shortened, which will be described below with reference to FIG. 10 to FIG. 12.

FIG. 10 illustrates an example of a screen displayed on a user interface of a user device to guide authentication according to a negotiated authentication method of an electronic device according to an embodiment.

According to an embodiment, after negotiating the device authentication method with the electronic device 400, the first processor 1440 may control the first interface 1420 to output a guide (hereinafter, a first guide) for requesting confirmation for device authentication from the user in the confirmation request operation 709 of FIG. 7.

The first guide according to an embodiment may include a linguistic guide including a description of an action (operation) and/or a visual guide including an illustration, a graphic guide, a visual reference, etc., regarding an operation.

For example, in a case where confirmation for device authentication includes an operation to be performed by a user, as shown in FIG. 10, the first processor 1440 may provide a first guide so that the user may open and close the door of the refrigerator 112 once.

In this instance, the first guide may include a linguistic guide, such as 'Opening and Closing the door to verify your refrigerator', and a visual guide such as a graphic guide showing the door of the refrigerator is opened and closed.

Although not shown in FIG. 10, confirmation for device authentication may not include an operation to be performed by the user.

For example, in a case where an ultrasonic signal or an infrared light (IR) signal is used as a device authentication method between the user device 140 and the electronic device 400, device authentication may be performed through signal exchange between each device.

In this instance, the first guide displayed on the first interface 1420 by the first processor 1440 may include a linguistic and/or visual guide indicating that a device authentication process is currently being performed.

The type of the first guide is not limited to the above-described example. A guide for providing information about confirmation through five senses may be further included, or some of the above-described guides may be omitted.

The screen displayed on the interface (i.e., the first interface 1420) of the user device 140 in the device authentication process has been described above. Because there are a plurality of electronic devices 400 of the same type in an environment where the user device 140 and the electronic device 400 are performing onboarding, the user may not know which electronic device 400 among the plurality of electronic devices 400 is currently performing an onboarding process. In response, a guide (hereinafter referred to as a 'second guide') displayed on an interface of the electronic device 400 that is the target of authentication in the device authentication process will be described below.

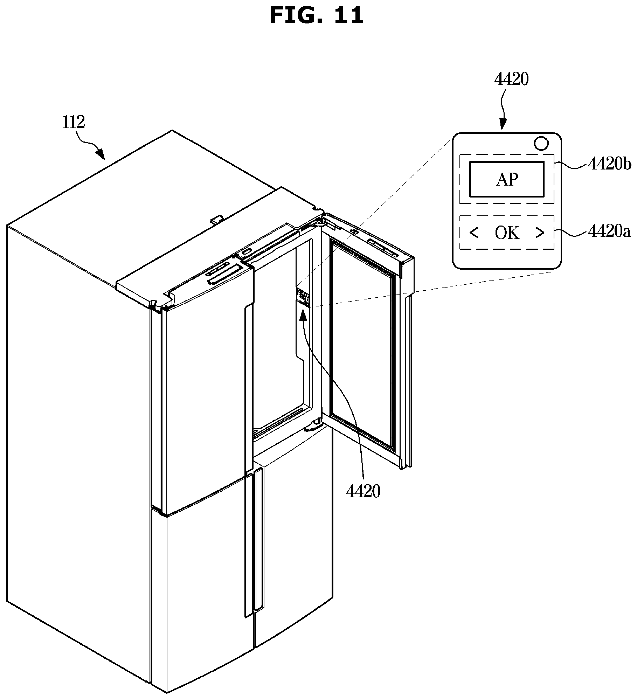

FIG. 11 illustrates an example of a screen displayed on a user interface of an electronic device to receive a confirmation input for authentication of the electronic device according to an embodiment.

The electronic device 400 may include a user interface (e.g., the user interface 420 of FIG. 4) and/or a processor (e.g., the processor 440 of FIG. 4). The user interface of the electronic device 400 may include an input interface (e.g., the input interface 420a of FIG. 4) and/or an output interface (e.g., the output interface 420b of FIG. 4).

The user interface of the electronic device 400 is referred to as a second interface 4420, and the processor of the electronic device 400 is referred to as a second processor 4440. In addition, the input interface of the electronic device 400 is referred to as a second input interface 4420a, and the output interface of the user device 140 is referred to as a second output interface 4420b.

According to an embodiment, the second processor 4440 may control the second interface 4420 to output a second guide indicating that the electronic device 400 is in a state for receiving a confirmation input in the confirmation request operation 709 of FIG. 7.

By displaying the second guide on the second interface 4420, a user may identify the electronic device 400 that is currently performing device authentication with the user device 140. That is, the user may recognize which electronic device 400 is a target for confirmation and is included in the first guide displayed on the first interface 1420.

According to an embodiment, the second processor 4440 may display a preset indicator on the second user interface 4420 to indicate that the electronic device 400 is in a state for receiving a confirmation input.

For example, in a case where the electronic device 400 performing device authentication is a refrigerator, the second processor 4440 may control the second user interface 4420 to display a blinking "AP" on the second output interface 4420b, thereby providing the user with information that the electronic device 400 currently performing device authentication is the refrigerator 112 with the blinking "AP" displayed, and information that the refrigerator 112 has currently switched to a state for receiving a confirmation input. In this instance, the type of indicator displayed on the second output interface 4420b is not limited to the above example, and any indicator suitable for providing the user with information about which electronic device 400 is currently performing device authentication and/or information that the electronic device 400 has currently switched to a state for receiving a confirmation input may be adopted as an indicator included in the second guide displayed on the second output interface 4420b.

According to an embodiment, the user may recognize the second guide displayed on the second output interface 4420b, and may enter confirmation for device authentication into the electronic device 400 on which the second guide is displayed. For example, referring to FIG. 11, the user may enter confirmation for device authentication by pressing an OK button on the second input interface 4420a for a preset predetermined time.

The above-described device authentication process for onboarding of the electronic device 400 may take a long time (e.g., approximately 8 to 10 seconds) from when the user requests a communication establishment between the user device 140 and the electronic device 400 to when the user enters confirmation for device authentication. Accordingly, the user may cancel the connection during the process or give up the onboarding process.

According to one aspect of the disclosure, by eliminating the screen displayed on the user device 140 while data communication for negotiating the device authentication method is being performed as shown in FIG. 9, or by shortening the displayed time, connection cancellation during the process may be prevented and a connection rate may be increased.

That is, customer experience may be improved by preventing the user from waiting while data communication for negotiating the device authentication method is being performed.

Specifically, according to an embodiment, the first processor 1420 of the user device 140 may guide device authentication using the most basic and most frequently used method (hereinafter referred to as a 'default device authentication method') among a plurality of device authentication methods that each electronic device 400 may perform. Guiding the default device authentication method may be performed not only by the first processor 1420 of the user device 140, but also by the second processor 4420 of the electronic device 400.

Hereinafter, a process in which the default device authentication method is performed in the user device 140 or the electronic device 400 will be described with reference to FIG. 10 to FIG. 12.

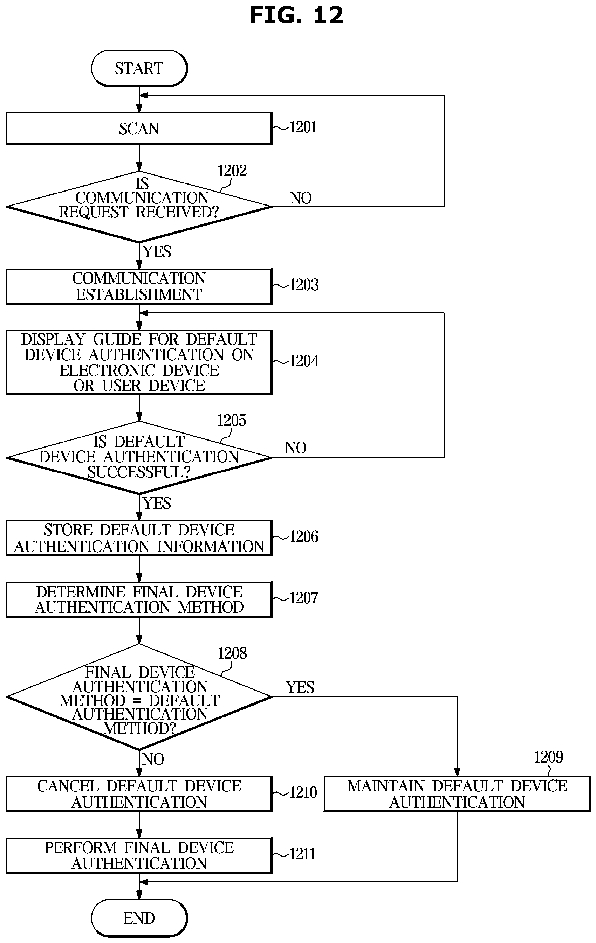

FIG. 12 is a flowchart illustrating default device authentication between a user device and an electronic device according to an embodiment.

According to an embodiment, the user device 140 may identify the electronic device 400 whose communication standby state is activated through scanning (1201).

In this instance, the user device 140 may receive a broadcast packet periodically transmitted from the electronic device 400 whose communication standby state is activated. Here, the broadcast packet may include information about whether the electronic device 400 supports a service for default device authentication.

When the electronic device 400 is identified, the user device 140 may request a communication establishment based on identification information included in the broadcast packet or preset password information of the electronic device 400 (1202). In this instance, as described above with reference to FIG. 8, the first processor 1440 of the user device 140 may control the first user interface 1420 to display at least one button for receiving the identified electronic device 400 and/or a user instruction indicating whether to establish communication with the identified electronic device 400.

The electronic device 400 receiving the communication establishment request (Yes in operation 1202) may establish communication based on the received identification information or preset password information (1203). In this instance, the established communication may be one of Wi-Fi communication, Bluetooth communication, Bluetooth Low Energy communication, and/or Zigbee communication.

When communication is established between the user device 140 and the electronic device 400, the user device 140 or the electronic device 400 may display a guide for device authentication according to the default device authentication method (1204).

Specifically, based on establishment of communication, the first processor 1440 of the user device 140 may control the first user interface 1420 to output a first guide for requesting confirmation according to the preset default authentication method.

The second processor 4440 of the electronic device 400 may control the electronic device 400 to switch to a state for receiving confirmation for preset default authentication, based on establishment of communication.

In addition, the second processor 4440 of the electronic device 400 may control the second user interface 4420 to output a second guide indicating that the electronic device 400 is in a state for receiving a confirmation input according to a preset confirmation method, based on establishment of communication.

According to an embodiment, the first guide and the second guide may be displayed simultaneously or at different times. That is, the first guide and the second guide may be displayed with a time difference.

For example, the first processor 1440 of the user device 140 may control the first user interface 1420 to display the first guide in operation 703 of FIG. 7 (i.e., a state where communication is established between the user device 140 and the electronic device 400), and the second processor 4440 of the electronic device may control the second user interface 4420 to display the second guide in operation 705 or 707 of FIG. 7 (i.e., a state where a resource for data exchange is requested from the user device 140).

The default device authentication method may differ depending on the electronic device 400 that is the target of authentication, and may be preset to the most basic or most frequently used method among a plurality of device authentication methods that each electronic device 400 may perform. For example, the default device authentication method may be preset to a simple method. The simple method may include authentication performed by having the user perform a simple action on the electronic device 400 for confirmation, such as pressing a preset button for a preset time or performing a preset motion (e.g., opening and closing the door of the refrigerator 112 once).

When receiving confirmation according to the preset default device authentication method from the user, the second processor 4400 of the electronic device 400 may transmit a confirmation success response to the user device 140.

Accordingly, the first processor 1440 of the user device 140 may determine whether authentication according to the preset default device authentication method is successful (1205).

When authentication according to the preset default device authentication method fails (No in operation 1205), the user device 140 or the electronic device 400 may display the guide for device authentication according to the default device authentication method again.

When authentication according to the preset default device authentication method is successful (Yes in operation 1205), the user device 140 may set, to 1 bit, a state indicating device authentication according to the default device authentication method is completed and store the state in a random access memory (RAM) of the memory 450 (1206).

Thereafter, when data exchange for determining a final device authentication method is completed between the user device 140 and the electronic device 400, the first processor 1420 of the user device 140 may determine a final device authentication method (1207).

When authentication according to the preset default device authentication method fails (No in operation 1205), the first processor 1440 of the user device 140 may immediately perform data exchange between the user device 140 and the electronic device 400 for determining the final device authentication method without separately storing the device authentication failure, and determine the final device authentication method.

In this instance, the final device authentication method may be the same as or different from the default device authentication method.

For example, the final device authentication method may be performed by at least one of a broadband ultrasound attenuation (BUA) method using an ultrasonic signal to further increase security, a method of entering a preset serial number corresponding to each electronic device 400, a method of scanning a preset QR code, or other authentication methods, such as a user's personal identification number (PIN), pattern, fingerprint recognition, or face recognition.

The first processor 1440 of the user device 140 may determine whether the final device authentication method determined through data exchange is the same as the default authentication method (1208).

When the final device authentication method is the same as the default authentication method (Yes in operation 1208), the first processor 1440 of the user device 140 may maintain the default device authentication based on the information about the default device authentication success state stored in operation 1206 (1209).

Accordingly, the first processor 1440 of the user device 140 may determine that device authentication is completed, and transmit onboarding information to the authenticated electronic device 400 in order to onboard the authenticated electronic device 400 to the cloud network 130.

When the final device authentication method is different from the default authentication method (No in operation 1208), the first processor 1440 of the user device 140 may cancel authentication according to the existing default device authentication method (1210), and may perform device authentication according to the final device authentication method (1211). In addition, the first processor 1440 of the user device 140 may transmit a control signal to the electronic device 400 for device authentication according to the final device authentication method.

When device authentication according to the final device authentication method is completed, the first processor 1440 of the user device 140 may transmit onboarding information to the authenticated electronic device 400 so that the authenticated electronic device 400 may be onboarded to the cloud network 130.

By performing device authentication according to the preset default authentication method, as described with reference to FIG. 9, the user may be provided with a guide for device authentication immediately after requesting a communication establishment with the identified electronic device 400 without waiting until data exchange for negotiating the device authentication method is completed. Accordingly, connection time perceived by the user may be reduced.

According to various embodiments, the above processes performed by the first processor 1440 of the user device 140 may also be performed by the second processor 4440 of the electronic device 400.

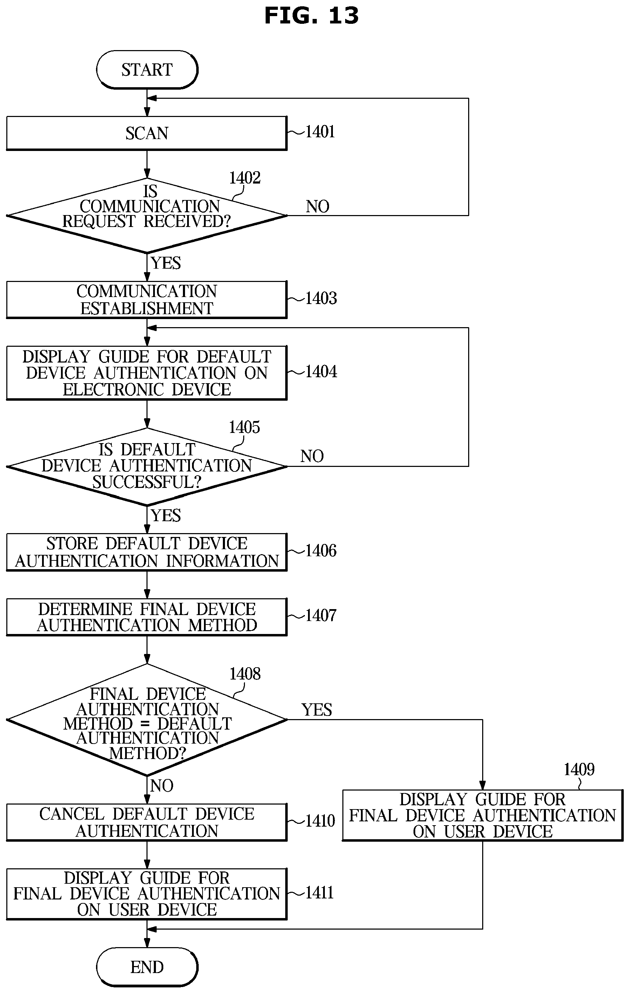

FIG. 13 is a flowchart illustrating default device authentication between a user device and an electronic device according to another embodiment.

According to an embodiment, the user device 140 may identify the electronic device 400 whose communication standby state is activated through scanning (1401), and may request a communication establishment based on identification information included in a broadcast packet received from the electronic device 400 or preset password information of the electronic device 400 (1402). In this instance, the first processor 1440 of the user device 140 may control the first user interface 1420 to display at least one button for receiving the identified electronic device 400 and/or a user instruction indicating whether to establish communication with the identified electronic device 400.

Thereafter, the electronic device 400 receiving the communication establishment request (Yes in operation 1402) may establish communication based on the received identification information or preset password information (1403). In this instance, the established communication may be one of Wi-Fi communication, Bluetooth communication, Bluetooth Low Energy communication, and/or Zigbee communication.

The broadcast packet transmitted by the electronic device 400 may include a request indicating whether the user device 140 supports a service for default device authentication.

When the user device 140 does not support the service for default device authentication, the user device 140 may not display a guide (i.e., a first guide) for device authentication according to the default device authentication method. However, even in this case, the first processor 1440 of the user device 140 may transmit a control signal to the second processor 4440 of the electronic device 400 through communication so that the electronic device 400 switches to a state for receiving confirmation for preset default authentication.

Accordingly, when communication is established between the user device 140 and the electronic device 400, only the electronic device 400 may display a guide (i.e., a second guide) for device authentication according to the default device authentication method (1404).

Specifically, based on establishment of communication, the second processor 4440 of the electronic device 400 may control the second user interface 4420 to output a second guide indicating that the electronic device 400 is in a state for receiving a confirmation input according to a preset confirmation method.

In addition, the second processor 4440 of the electronic device 400 receiving the control signal may switch the electronic device 400 to a state for receiving a confirmation input for default authentication.

The description of default device authentication method preset according to the electronic device 400 that is the target of authentication described above in FIG. 12 may be equally applied.

When receiving confirmation according to the preset default device authentication method from the user, the second processor 4400 of the electronic device 400 may transmit a confirmation success response to the user device 140.

Accordingly, the first processor 1440 of the user device 140 may determine whether authentication according to the preset default device authentication method is successful (1405). When default device authentication fails (No in operation 1405), the second processor 4440 of the electronic device 400 may again display the second guide indicating that the electronic device 400 is currently in a state for receiving a confirmation input according to the preset confirmation method.

As such, even in a case where the user device 140 does not support the service for default device authentication, the second guide indicating that the electronic device 400 is in a state for receiving a confirmation input may be displayed, and thus the user may be guided to perform default device authentication.

When authentication according to the preset default device authentication method is successful (Yes in operation 1405), the user device 140 may set, to 1 bit, a state indicating device authentication according to the default device authentication method is completed and store the state in a random access memory (RAM) of the memory 450 (1406).

Thereafter, when data exchange for determining a final device authentication method is completed between the user device 140 and the electronic device 400, the first processor 1420 of the user device 140 may determine a final device authentication method (1407).

As described above, the final device authentication method may be the same as or different from the default device authentication method.

For example, the final device authentication method may be at least one of a broadband ultrasound attenuation (BUA) method using an ultrasonic signal to further increase security, a method of entering a serial number preset corresponding to each electronic device 400, a method of scanning a preset QR code, or other authentication methods, such as a user's PIN, pattern, fingerprint recognition, or face recognition.

The first processor 1440 of the user device 140 may determine whether the final device authentication method determined through data exchange is the same as the default authentication method (1408).

When the final device authentication method is the same as the default authentication method (Yes in operation 1408), the first processor 1440 of the user device 140 may maintain the default device authentication based on the information about the default device authentication success state stored in operation 1406 (1409).

Accordingly, the first processor 1440 of the user device 140 may determine that device authentication is completed, and transmit onboarding information to the authenticated electronic device 400 in order to onboard the authenticated electronic device 400 to the cloud network 130.

In contrast, when the final device authentication method is different from the default authentication method (No in operation 1408), the first processor 1440 of the user device 140 may cancel authentication according to the existing default device authentication method (1410), and may perform device authentication according to the final device authentication method (1411).

For example, even in a case where the user device 140 does not support the service for default device authentication, a guide according to the final device authentication method determined through data exchange may be provided, and thus the user device 140 may display a guide for requesting confirmation for device authentication according to the final device authentication method.

When device authentication according to the final device authentication method is completed, the first processor 1440 of the user device 140 may transmit onboarding information to the authenticated electronic device 400 so that the authenticated electronic device 400 may be onboarded to the cloud network 130.

That is, by performing device authentication according to the preset default authentication method, the user is not be required to wait until data exchange for negotiating the device authentication method is completed. Accordingly, connection time perceived by the user may be reduced.

According to various embodiments, the above processes performed by the first processor 1440 of the user device 140 may also be performed by the second processor 4440 of the electronic device 400.

According to an embodiment, a user device may include: communication circuitry configured to establish communication with an electronic device registered with a cloud server; a user interface; and a processor electrically connected to the communication circuitry and the user interface, wherein the processor may be configured to: control the user interface to output a first guide for requesting confirmation according to a preset default authentication method, based on establishment of communication between the communication circuitry and the electronic device, and transmit a control signal to the electronic device to output a second guide indicating that the electronic device is in a state for receiving the confirmation according to the preset default authentication method.

The first guide may include at least one of a linguistic guide including a description of an action required for the confirmation or a visual guide including a visual indicator.

The visual indicator may include at least one of an illustration, a graphic guide, or a visual reference for the action required for the confirmation.

The second guide may include a preset indicator for displaying that the electronic device is in a state for receiving the confirmation.

The first guide and the second guide may be output at different times or simultaneously.

The established communication may be one of wireless fidelity (Wi-Fi) communication, Bluetooth communication, Bluetooth Low Energy communication, or Zigbee communication.

The user device may further include memory configured to store state information about the default device authentication, and the processor may be configured to set, to 1 bit, a state indicating device authentication according to the default authentication method is completed and store the state in the memory, based on the authentication according to the preset default authentication method being successful.

The processor may be configured to: determine a final device authentication method through data exchange with the electronic device after the authentication according to the default authentication method is successful; and determine whether the final device authentication method is identical to the default authentication method.

The processor may be configured to maintain the state indicating device authentication according to the default authentication method is completed, based on determining that the final device authentication method is identical to the default authentication method.

The processor may be configured to cancel completion of the device authentication according to the default authentication method and perform device authentication according to the final device authentication method, based on determining that the final device authentication method is different from the default authentication method.

According to an embodiment, a system for onboarding an electronic device may include: a cloud network; a user device including first communication circuitry configured to establish communication with an electronic device registered with the cloud network, a first user interface, and a first processor electrically connected to the first communication circuitry and the first user interface; and an electronic device including second communication circuitry configured to establish communication with the user device, a second user interface, and a second processor electrically connected to the second communication circuitry and the second user interface.

The first processor may be configured to control the first user interface to output a first guide for requesting confirmation according to a preset default authentication method, based on establishment of communication between the first communication circuitry and the electronic device, and the second processor may be configured to control the second user interface to output a second guide indicating that the electronic device is in a state for receiving the confirmation according to the preset default authentication method.

The first guide may include at least one of a linguistic guide including a description of an action required for the confirmation, or a visual guide including a visual indicator for the action required for the confirmation.

The visual indicator may include at least one of an illustration, a graphic guide, or a visual reference for the action required for the confirmation.

The second guide may include a preset indicator for displaying that the electronic device is in a state for receiving the confirmation.

The first guide and the second guide may be output at different times or simultaneously.

The second processor may switch the electronic device to a state for receiving confirmation according to the preset default authentication method based on establishment of communication between the second communication circuitry and the user device.

The established communication may be one of a wireless fidelity (Wi-Fi) communication, Bluetooth communication, Bluetooth Low Energy communication, or Zigbee communication.

The user device may further include first memory configured to store state information about the default device authentication, and the first processor may be configured to set, to 1 bit, a state indicating device authentication according to the default authentication method is completed and store the state in the first memory, based on the authentication according to the preset default authentication method being successful.

The first processor may be configured to: determine a final device authentication method through data exchange with the electronic device after the authentication according to the default authentication method is successful; and determine whether the final device authentication method is identical to the default authentication method.

According to an embodiment, a method for onboarding an electronic device may include: establishing communication between a user device including a first user interface and an electronic device including a second user interface and registered with a cloud network; outputting, to the first user interface, a first guide for requesting confirmation according to the preset default authentication method, based on establishment of communication between the user device and the electronic device; and outputting, to the second user interface, a second guide indicating that the electronic device is in a state for receiving the confirmation according to the preset default authentication method, simultaneously with the first guide or at a different time.

Technical aspects that can be achieved by the disclosure are not limited to the above-mentioned aspects, and other technical aspects not mentioned will be clearly understood by one of ordinary skill in the technical art to which the disclosure belongs from the following description.

Although embodiments of the disclosure have been described with reference to the accompanying drawings, a person having ordinary skilled in the art will appreciate that other specific modifications may be easily made without departing from the technical spirit or essential features of the disclosure. Therefore, the foregoing embodiments should be regarded as illustrative rather than limiting in all aspects.

Meanwhile, the disclosed embodiments may be implemented in the form of a recording medium that stores instructions executable by a computer. The instructions may be stored in the form of program codes, and when executed by a processor, the instructions may create a program module to perform operations of the disclosed embodiments. The recording medium may be implemented as a computer-readable recording medium.

The computer-readable recording medium may include all kinds of recording media storing instructions that can be interpreted by a computer. For example, the computer-readable recording medium may be read only memory (ROM), random access memory (RAM), a magnetic tape, a magnetic disc, a flash memory, an optical data storage device, etc.

Furthermore, the computer-readable recording medium may be provided in the form of a non-transitory storage medium. The term 'non-transitory storage medium' may refer to a tangible device without including a signal (e.g., electromagnetic waves) and may not distinguish between storing data in the storage medium semi-permanently and temporarily. For example, the non-transitory storage medium may include a buffer that temporarily stores data.

The method according to the various embodiments disclosed herein may be provided in a computer program product. The computer program product may be traded between a seller and a buyer as a product. The computer program product may be distributed in the form of a machine-readable recording medium (e.g., compact disc read only memory (CD-ROM)), or may be distributed (e.g., download or upload) through an application store (e.g., Play Store^{™}) online or directly between two user devices (e.g., smartphones). In the case of online distribution, at least a portion of the computer program product (e.g., downloadable app) may be stored at least semi-permanently or may be temporarily generated in a recording medium, such as a memory of a server of a manufacturer, a server of an application store, or a relay server.

## Claims

1. A user device, comprising:
communication circuitry configured to establish communication with an electronic device registered with a cloud server;
a user interface; and
a processor electrically connected to the communication circuitry and the user interface,
wherein the processor is configured to:
control the user interface to output a first guide for requesting confirmation according to a preset default authentication method, based on establishment of communication between the communication circuitry and the electronic device, and
transmit a control signal to the electronic device to output a second guide indicating that the electronic device is in a state for receiving the confirmation according to the preset default authentication method.

2. The user device of claim 1, wherein the first guide includes at least one of a linguistic guide including a description of an action required for the confirmation or a visual guide including a visual indicator.

3. The user device of claim 2, wherein the visual indicator includes at least one of an illustration, a graphic guide, or a visual reference for the action required for the confirmation.

4. The user device of claim 1, wherein the second guide includes a preset indicator for displaying that the electronic device is in a state for receiving the confirmation.

5. The user device of claim 1, wherein the first guide and the second guide are output simultaneously or at different times.

6. The user device of claim 1, wherein the established communication is one of a wireless fidelity (Wi-Fi) communication, Bluetooth communication, Bluetooth Low Energy communication, or Zigbee communication.

7. The user device of claim 1, further comprising:
memory configured to store state information about the default device authentication, and
the processor is configured to set, to 1 bit, a state indicating device authentication according to the default authentication method is completed and store the state in the memory, based on the authentication according to the preset default authentication method being successful.

8. The user device of claim 7, wherein the processor is configured to:
determine a final device authentication method through data exchange with the electronic device after the authentication according to the default authentication method is successful; and
determine whether the final device authentication method is identical to the default authentication method.

9. The user device of claim 8, wherein the processor is configured to maintain the state indicating device authentication according to the default authentication method is completed, based on determining that the final device authentication method is identical to the default authentication method.

10. The user device of claim 8, wherein the processor is configured to cancel completion of the device authentication according to the default authentication method and perform device authentication according to the final device authentication method, based on determining that the final device authentication method is different from the default authentication method.

11. A system for onboarding an electronic device, the system comprising:
a cloud network;
a user device comprising first communication circuitry configured to establish communication with an electronic device registered with the cloud network, a first user interface, and a first processor electrically connected to the first communication circuitry and the first user interface; and
an (**the electronic device comprising second communication circuitry configured to establish communication with the user device, a second user interface, and a second processor electrically connected to the second communication circuitry and the second user interface,
wherein the first processor is configured to:
control the first user interface to output a first guide for requesting confirmation according to a preset default authentication method, based on establishment of communication between the first communication circuitry and the electronic device, and
the second processor is configured to:
control the second user interface to output a second guide indicating that the electronic device is in a state for receiving the confirmation according to the preset default authentication method.

12. The system of claim 11, wherein the first guide includes at least one of a linguistic guide including a description of an action required for the confirmation, or a visual guide including a visual indicator for the action required for the confirmation.

13. The system of claim 12, wherein the visual indicator includes at least one of an illustration, a graphic guide, or a visual reference for the action required for the confirmation.

14. The system of claim 11, wherein the second guide includes a preset indicator for displaying that the electronic device is in a state for receiving the confirmation.

15. A method for onboarding an electronic device, the method comprising:
establishing communication between a user device comprising a first user interface and an electronic device comprising a second user interface and registered with a cloud network;
outputting, to the first user interface, a first guide for requesting confirmation according to the preset default authentication method, based on establishment of communication between the user device and the electronic device; and
outputting, to the second user interface, a second guide indicating that the electronic device is in a state for receiving the confirmation according to the preset default authentication method, simultaneously with the first guide or at a different time.
